# EUROPEAN PATENT APPLICATION

(11) **EP 4 745 650 A1**
(43) Date of publication of application: **20.05.2026**
(21) Application number: 24868428.4
(22) Date of filing: 04.07.2024
(51) Int. Cl.: G02B 27/01, G02B 7/02

(54) **DISPLAY ASSEMBLY AND WEARABLE ELECTRONIC DEVICE INCLUDING SAME**

(30) Priority: 22.09.2023 KR 20230127109; 25.10.2023 KR 20230143752
(71) Applicant: Samsung Electronics Co., Ltd., Suwon-si, Gyeonggi-do 16677 (KR)
(72) Inventor: MOON, Youngmin, Suwon-si Gyeonggi-do 16677 (KR); BAE, Jaehyun, Suwon-si Gyeonggi-do 16677 (KR); SHIN, Yena, Suwon-si Gyeonggi-do 16677 (KR); YOO, Areum, Suwon-si Gyeonggi-do 16677 (KR); LEE, Changsu, Suwon-si Gyeonggi-do 16677 (KR); CHOI, Hyunsuk, Suwon-si Gyeonggi-do 16677 (KR)
(74) Representative: Gulde & Partner
(86) International application number: PCT/KR2024/009501
(87) International publication number: WO 2025/063445

(57) **Abstract**

In an embodiment, a wearable electronic device may comprise: a housing configured to be worn on the head of a user, a display module provided in the housing and including a main barrel, a display panel, and a lens assembly positioned inside the main barrel so as to be positioned in a first direction with respect to the display panel; and a cap assembly configured to be attachable to and detachable from a portion of the display module, which is in the first direction, so as to block light leaking through the outer region of the lens assembly. The cap assembly may comprise: a cap barrel attachable to and detachable from the portion of the display module, which is in the first direction, and a cap lens provided in the cap barrel.

## Description

### BACKGROUND

### Field

Various embodiments of the present disclosure relate to a display assembly and a wearable electronic device including the same.

### Description of Related Art

Various wearable electronic devices, such as a virtual reality (VR) device, an augmented reality (AR) device, and/or a mixed reality (MR) device, are being commercialized. Wearable electronic devices can be formed to be worn on the head of a user. For example, wearable electronic devices can have the form of glasses or goggles.

### SUMMARY

### Technical Goals

In an embodiment, a wearable electronic device includes a housing configured to be worn on the head of a user, a display module provided in the housing and including a main barrel, a display panel, and a lens assembly positioned inside the main barrel in a first direction with respect to the display panel, and a cap assembly configured to be attachable to and detachable from a portion of the display module, which is in the first direction, to block light leaking through an outer region of the lens assembly. The cap assembly includes a cap barrel configured to be attachable to and detachable from the portion of the display module, which is in the first direction, and a cap lens provided in the cap barrel.

In an embodiment, a display assembly applied to a wearable electronic device includes a display module including a main barrel, a display panel, and a lens assembly positioned inside the main barrel in a first direction with respect to the display panel, and a cap assembly configured to be attachable to and detachable from a portion of the display module, which is in the first direction, to block light leaking through an outer region of the lens assembly. The cap assembly includes a cap barrel configured to be attachable to and detachable from the portion of the display module, which is in the first direction, and a cap lens provided in the cap barrel.

In an embodiment, a wearable electronic device includes a housing configured to be worn on the head of a user, a display module provided in the housing and including a main barrel, a display panel, and a lens assembly positioned inside the main barrel in a first direction with respect to the display panel, and a cap assembly configured to be attachable to and detachable from a portion of the display module, which is in the first direction, to block light leaking through an outer region of the lens assembly. The cap assembly includes a cap barrel configured to be attachable to and detachable from the portion of the display module, which is in the first direction, a cap lens provided in the cap barrel, a surface treatment for light blocking being applied to an outer region, a light-blocking layer positioned on one surface of the cap lens, and an anti-scattering layer positioned in the first direction with respect to the cap lens. When the wearable electronic device is viewed in the first direction, at least a portion of the outer region of the cap lens to which the surface treatment is applied and at least a portion of the light-blocking layer overlap the outer region of the lens assembly.

In an embodiment, a cap assembly is coupled to a portion of a display module, which is in a first direction, configured to block light leaking through an outer region of a lens assembly. In an embodiment, the cap assembly is coupled to the portion of the display module, which is in the first direction, configured to supplement an enlargement and/or reduction function of the lens assembly. In an embodiment, the cap assembly is coupled to the portion of the display module, which is in the first direction, configured to prevent the portion (e.g., a first polarizing film) of the display module, which is in the first direction, from being exposed to the outside. In an embodiment, the cap assembly is coupled to the portion of the display module, which is in the first direction, configured to protect the lens assembly and configured to protect the naked eyes of a user when the lens assembly is damaged. In an embodiment, the cap assembly is coupled to the portion of the display module, which is in the first direction, configured to improve a waterproof and/or dustproof function of a display assembly.

The effects of the display assembly and the wearable electronic device including the same according to an embodiment may not be limited to said effects, and other unstated effects may be clearly understood from the following description by one of ordinary skill in the art.

### BRIEF DESCRIPTION OF THE DRAWINGS

The above and other aspects, features, and advantages of certain embodiments in the disclosure will become apparent from the following detailed description with reference to the accompanying drawings.
FIG. 1 is a block diagram illustrating an electronic device in a network environment, according to an embodiment.
FIG. 2A is a diagram illustrating a front view of a wearable electronic device, according to an embodiment.
FIG. 2B is a diagram illustrating a rear view of a wearable electronic device, according to an embodiment.
FIG. 3A is an assembled perspective view of a display assembly, according to an embodiment.
FIG. 3B is an exploded perspective view of a display assembly, according to an embodiment.
FIG. 3C is an exploded cross-sectional view of a display assembly, according to an embodiment.
FIG. 3D is an enlarged view of a portion A of FIG. 3C.
FIG. 3E is an exploded cross-sectional view of a cap assembly, according to an embodiment.

### DETAILED DESCRIPTION

Hereinafter, embodiments will be described in detail with reference to the accompanying drawings. When describing the embodiments with reference to the accompanying drawings, like reference numerals refer to like components, and any repeated description related thereto will be omitted.

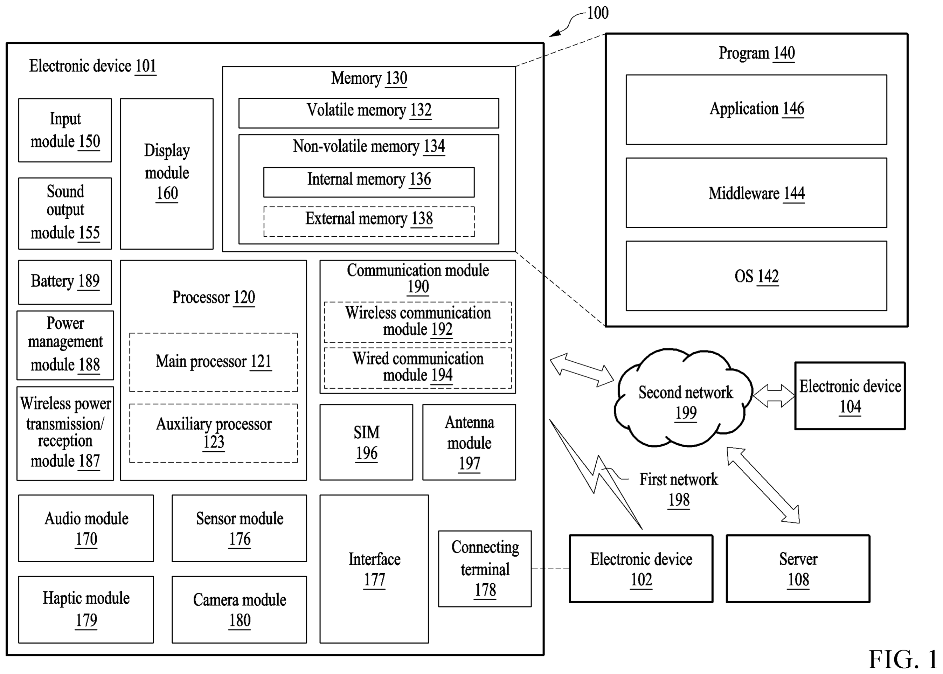

FIG. 1 is a block diagram illustrating an electronic device 101 in a network environment 100, according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150 or output the sound via the sound output module 155 or an external electronic device (e.g., the electronic device 102) (e.g., a speaker or headphone) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth-generation (5G) network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a fourth-generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or user plane (U-plane) latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a PCB, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-Things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include code generated by a complier or code executable by an interpreter. The machine-readable storage medium may be provided in the form of a non-transitory storage medium. The term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

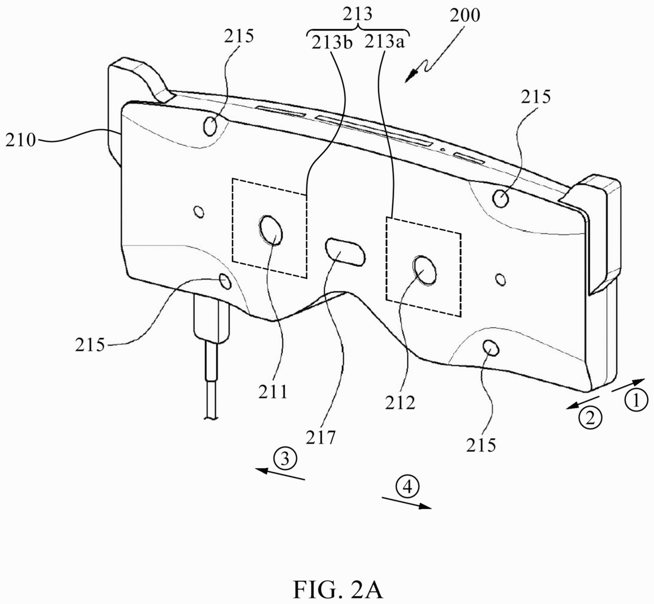

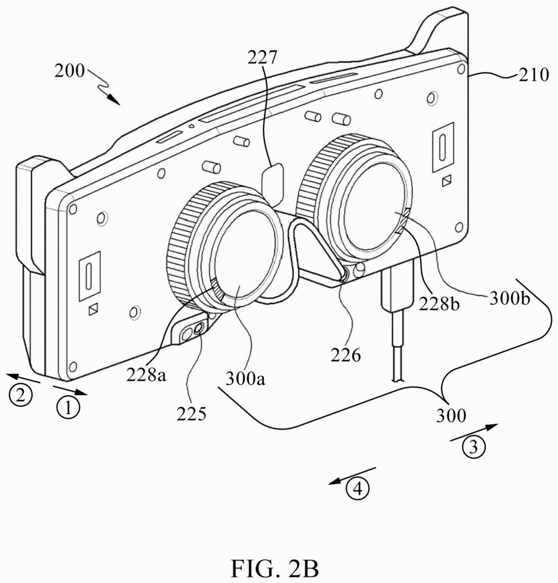

FIG. 2A is a diagram illustrating a front view of a wearable electronic device, according to an embodiment. FIG. 2B is a diagram illustrating a rear view of the wearable electronic device, according to an embodiment. FIG. 2B may be an appearance seen by the eyes of a user when the user wears a wearable electronic device 200.

Referring to FIG. 2A, according to various embodiments, the electronic device 101 of FIG. 1 may include the wearable electronic device 200 that provides a service that provides an extended reality (XR) experience to the user. For example, the XR or XR service may be defined as a service that collectively refers to virtual reality (VR), augmented reality (AR), and/or mixed reality (MR).

According to an embodiment, the wearable electronic device 200 may have a form factor to be worn on the head of the user. The wearable electronic device 200 may refer to a head-mounted device or head-mounted display (HMD) worn on the head of the user but may be provided in the form of at least one of glasses, goggles, a helmet, or a hat. The wearable electronic device 200 may include some types such as an optical see-through (OST) type configured such that, when being worn, external light reaches the eyes of the user through glasses or a video see-through (VST) type configured such that, when being worn, light emitted from a display reaches the eyes of the user but external light is blocked not to reach the eyes of the user.

According to an embodiment, the wearable electronic device 200 may be worn on the head of the user and provide images related to an XR service to the user. For example, the wearable electronic device 200 may provide XR content (hereinafter, also referred to as an XR content image) output such that at least one virtual object is visible overlapping in a display area or an area determined to be a field of view (FoV) of the user. According to an embodiment, the XR content may refer to an image related to a real space obtained through a camera (e.g., an image-capturing camera) or an image or video in which at least one virtual object is added to a virtual space. According to an embodiment, the wearable electronic device 200 may provide XR content based on a function being performed by the wearable electronic device 200 and/or a function being performed by one or more external electronic devices among external electronic devices (e.g., the electronic device 102, 104, or 108 of FIG. 1).

According to an embodiment, the wearable electronic device 200 may be at least partially controlled by an external electronic device (e.g., the electronic device 102 or 104 of FIG. 1), or may perform at least one function under the control of the external electronic device or perform at least one function independently.

Referring to FIGS. 2A and 2B, the wearable electronic device 200 may include a housing 210 and a display assembly 300. The housing 210 may be a configuration in which at least some of the components of FIG. 1 are disposed. The housing 210 may be configured to be worn on the head of the user. For example, the housing 210 may include a strap and/or a wearing member to be fixed on the body part of the user. For example, the user may wear the wearable electronic device 200 on his or her head to face a first direction ① of the wearable electronic device 200.

Referring to FIG. 2B, fourth function cameras 225, 226, and 227 (e.g., face recognition cameras) and/or the display assembly 300 may be disposed in the first direction ① of the housing 210 facing the face of the user. Referring to FIG. 2A, first function cameras 215 (e.g., recognition cameras), second function cameras 211 and 212 (e.g., image-capturing cameras), a depth sensor 217, and/or a touch sensor 213 may be disposed in a second direction ② of the housing 210, which is opposite to the first direction ①. Although not shown in the drawings, the housing 210 may include memory (e.g., the memory 130 of FIG. 1) and a processor (e.g., the processor 120 of FIG. 1) therein and may further include other components shown in FIG. 1.

In an embodiment, the display assembly 300 may be disposed in the first direction ① of the wearable electronic device 200. For example, the display assembly 300 may be provided in the housing 210 so as to face the face of the user.

According to an embodiment, the display assembly 300 may include a liquid crystal display (LCD), a digital mirror device (DMD), a liquid crystal on silicon (LCoS) device, an organic light-emitting diode (OLED), or a micro light-emitting diode (micro-LED).

In an embodiment, when the display assembly 300 is one of an LCD, a DMD, or an LCoS device, the wearable electronic device 200 may include a light source that emits light (e.g., visible light) to a screen output area of the display assembly 300. In another embodiment, when the display assembly 300 is capable of generating light (e.g., visible light) on its own, for example, when the wearable electronic device 200 is one of an OLED or a micro-LED, the wearable electronic device 200 may not include a separate light source. For example, when the display assembly 300 is implemented as an OLED or a micro-LED, a light source may be unnecessary, which may lead to the wearable electronic device 200 being lighter.

According to an embodiment, the display assembly 300 may include a first display assembly 300a and/or a second display assembly 300b. According to an embodiment, the first display assembly 300a may be disposed to face the left eye of the user in a fourth direction ④, and the second display assembly 300b may be disposed to face the right eye of the user in a third direction ③.

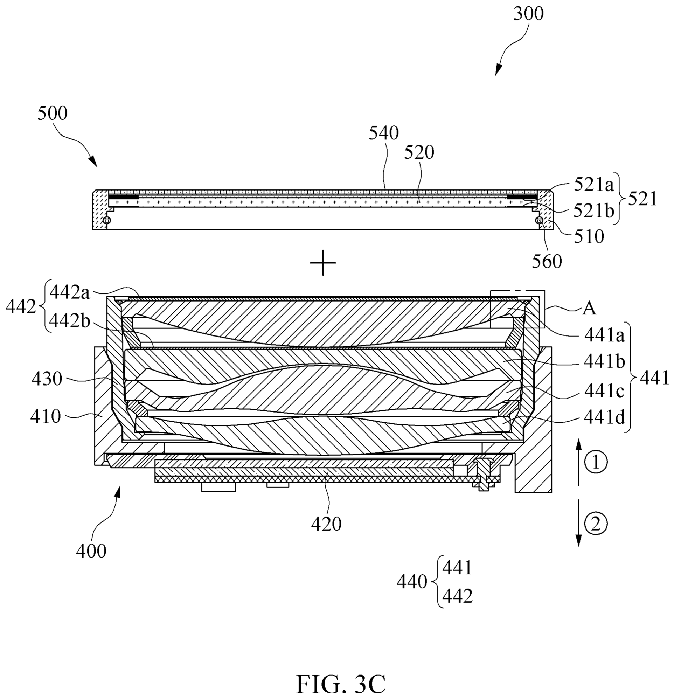

According to an embodiment, the display assembly 300 may include a lens assembly (e.g., a lens assembly 440 of FIG. 3C) including a transparent waveguide. The lens assembly 440 may adjust the focus so that a screen (e.g., an XR content image) output from a display panel (e.g., a display panel 420 of FIG. 3C) may be seen by the eyes of the user. For example, light (e.g., visible light) emitted from the display panel 420 may pass through the lens assembly 440 and be transmitted to the user through a waveguide formed inside the lens assembly 440. The lens assembly 440 may include at least one of a Fresnel lens, a pancake lens, a convex lens, or a multi-channel lens.

In an embodiment, the first function cameras 215 (e.g., the recognition cameras) may obtain an image in a state in which the wearable electronic device 200 is worn by the user. The first function cameras 215 may be used for a function of detecting the movement of the user or recognizing the gesture of the user. For example, the first function cameras 215 may be used for at least one of hand detection, hand tracking, recognition of a gesture (e.g., a hand gesture) of the user, and/or spatial recognition. For example, the first function cameras 215 may mainly use a global shutter (GS) camera having excellent performance compared to a rolling shutter (RS) camera to detect and track fine gestures or movements of hands and fingers and may be configured as a stereo camera including two or more GS cameras for head tracking and space recognition. The first function cameras 215 may be used for 3 degrees of freedom (DoF) and 6DoF head tracking, position (space, environment) recognition, and/or movement recognition. The first function cameras 215 may perform functions, such as 6DoF space recognition, and a simultaneous localization and mapping (SLAM) function for recognizing information (e.g., a position and/or direction) associated with a surrounding space through depth imaging. In an embodiment, the second function cameras 211 and 212 may also be used for hand detection and tracking, and the recognition of user gestures.

In an embodiment, the second function cameras 211 and 212 (e.g., the image-capturing cameras) may obtain an image related to the surrounding environment of the wearable electronic device 200. The second function cameras 211 and 212 may be used to capture images of the outside, generate an image or video corresponding to the outside, and transmit the image or video to a processor (e.g., the processor 120 of FIG. 1). The processor 120 may display the image provided from the second function cameras 211 and 212 on the display assembly 300. The second function cameras 211 and 212 may also be referred to as high resolution (HR) or photo video (PV) cameras and may include an HR camera. For example, the second function cameras 211 and 212 may include color cameras equipped with a function for obtaining high-quality images, such as an auto focus (AF) function and optical image stabilizer (OIS), but are not limited thereto. The second function cameras 211 and 212 may also include a GS camera or an RS camera.

In an embodiment, third function cameras 228a and 228b (e.g., eye-tracking (ET) cameras) may be disposed on the display assembly 300 such that the camera lenses face the eyes of the user when the user wears the wearable electronic device 200. The third function cameras 228a and 228b may be used for detecting and tracking the pupils (e.g., ET) and/or for recognizing the iris of the user. The processor 120 may verify a gaze direction by tracking movements of the left eye and the right eye of the user in an image received from the third function cameras 228a and 228b. By tracking the positions of the pupils in the image, the processor 120 may be configured such that the center of an XR content image displayed on a screen display area is positioned according to the direction in which the pupils are gazing. For example, the third function cameras 228a and 228b may use a GS camera to detect the pupils and track the movements of the pupils. The third function cameras 228a and 228b may be installed for each of the left eye and the right eye and may have the same camera performance and specifications.

In an embodiment, the fourth function cameras 225, 226, and 227 (e.g., face recognition cameras) may be used to detect and track a facial expression of the user (e.g., face tracking (FT)) when the user wears the wearable electronic device 200. For example, the fourth function cameras 225, 226, and 227 may be used to recognize the face of the user or may recognize and/or track both eyes of the user.

According to an embodiment, the depth sensor 217 (or a depth camera) may be used to verify a distance to an object (e.g., a target) through, for example, time of flight (TOF). TOF, which is technology for measuring a distance to an object using a signal (e.g., near-infrared rays, ultrasound, or laser), may transmit a signal from a transmitter and then measure the signal by a receiver, and may measure a distance to an object based on the TOF of the signal. For example, the depth sensor 217 may be configured to transmit a signal and receive a signal reflected from a subject. Alternatively of or additionally, the first cameras 215 may determine the distance to the object in place of the depth sensor 217.

According to an embodiment, the touch sensor 213 may be disposed in the second direction ② of the housing 210. The touch sensor 213 may be implemented as a single type or a left/right separated type based on the shape of the housing 210 but is not limited thereto. For example, in a case in which the touch sensor 213 is implemented as the left/right separated type as shown in FIG. 2A, when the user wears the wearable electronic device 200, a first touch sensor 213a may be disposed at a position corresponding to the left eye of the user in the fourth direction ④, and a second touch sensor 213b may be disposed at a position corresponding to the right eye of the user in the third direction ③.

In an embodiment, the touch sensor 213 may recognize a touch input using at least one of, for example, capacitive, resistive, infrared, or ultrasonic methods. For example, the touch sensor 213 using the capacitive method may recognize a physical touch (or contact) input or hovering (or proximity) input of an external object. According to some embodiments, the wearable electronic device 200 may use a proximity sensor (not shown) to recognize the proximity to an external object.

According to an embodiment, the touch sensor 213 may have a two-dimensional (2D) surface and transmit, to a processor (e.g., the processor 120 of FIG. 1), touch data (e.g., touch coordinates) of an external object (e.g., a finger of the user) contacting the touch sensor 213. The touch sensor 213 may detect a hovering input of an external object (e.g., a finger of the user) approaching within a first distance away from the touch sensor 213 or detect a touch input contacting the touch sensor 213.

According to an embodiment, the touch sensor 213 may provide 2D information about the contact point to the processor 120 as "touch data" when an external object touches the touch sensor 213. The touch data may be described as a "touch mode." When the external object is positioned within the first distance from the touch sensor 213 (or hovers above a proximity or touch sensor), the touch sensor 213 may provide hovering data about a time point or position of the external object hovering around the touch sensor 213 to the processor 120. The hovering data may also be described as a "hovering mode/proximity mode."

According to an embodiment, the wearable electronic device 200 may obtain the hovering data using at least one of the touch sensor 213, a proximity sensor (not shown), and/or the depth sensor 217 to generate information about a distance between the touch sensor 213 and an external object, a position, or a time point.

According to an embodiment, the housing 210 may include components of FIG. 1, for example, a processor (e.g., the processor 120 of FIG. 1) and memory (e.g., the memory 130 of FIG. 1) therein.

In an embodiment, the memory 130 may store various instructions executable by the processor 120. The instructions may include control instructions, such as arithmetic and logical computation, data movement, or input/output, which may be recognized by the processor 120. The memory 130 may include volatile memory (e.g., the volatile memory 132 of FIG. 1) and non-volatile memory (e.g., the non-volatile memory 134 of FIG. 1) to store, temporarily or permanently, various pieces of data.

In an embodiment, the processor 120 may be operatively, functionally, and/or electrically connected to each of the components of the wearable electronic device 200 to perform control and/or communication-related computation or data processing of each of the components. The operations performed by the processor 120 may be stored in the memory 130, and when executed, may be executed by the instructions that cause the processor 120 to operate.

Although there will be no limitation to the computation and data processing functions implemented by the processor 120 on the wearable electronic device 200, a series of operations related to an XR content service function will be described hereinafter. The operations of the processor 120 to be described below may be performed by executing the instructions stored in the memory 130.

According to an embodiment, the processor 120 may generate a virtual object based on virtual information based on image information. The processor 120 may output a virtual object related to an XR service along with background spatial information through the display assembly 300. For example, the processor 120 may obtain image information by capturing an image related to a real space corresponding to the FoV of the user wearing the wearable electronic device 200 through the second function cameras 211 and 212 or may generate a virtual space of a virtual environment. For example, the processor 120 may perform control to display, on the display assembly 300, XR content (hereinafter, referred to as an XR content screen) that outputs at least one virtual object such that the at least one virtual object is visible overlapping in a display area or an area determined to be the FoV of the user.

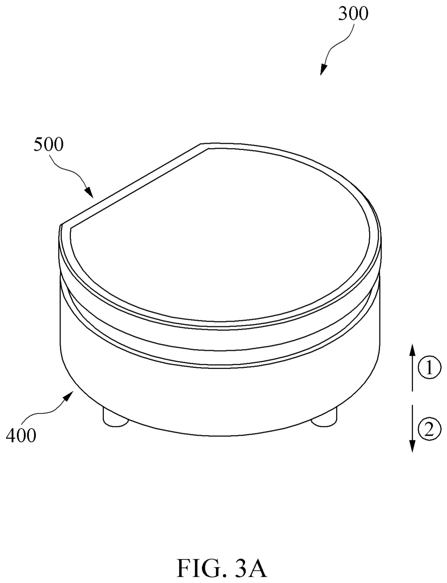

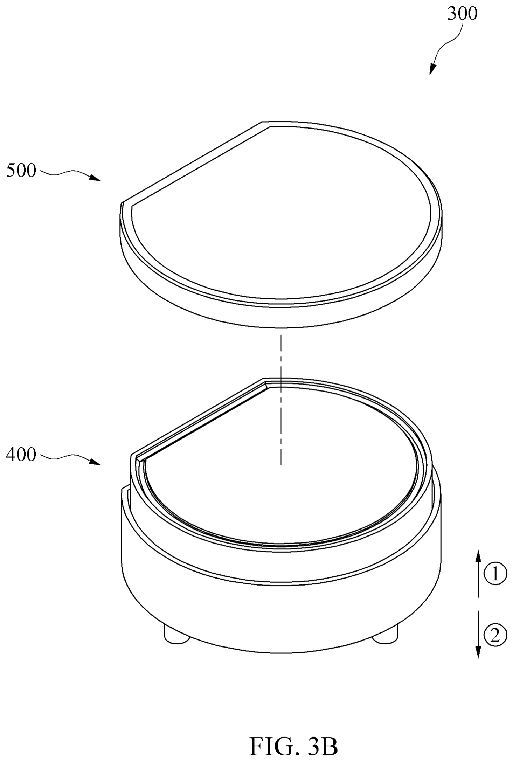

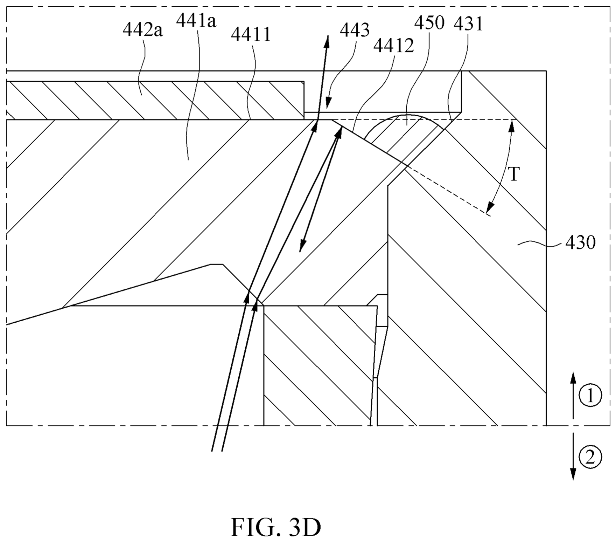

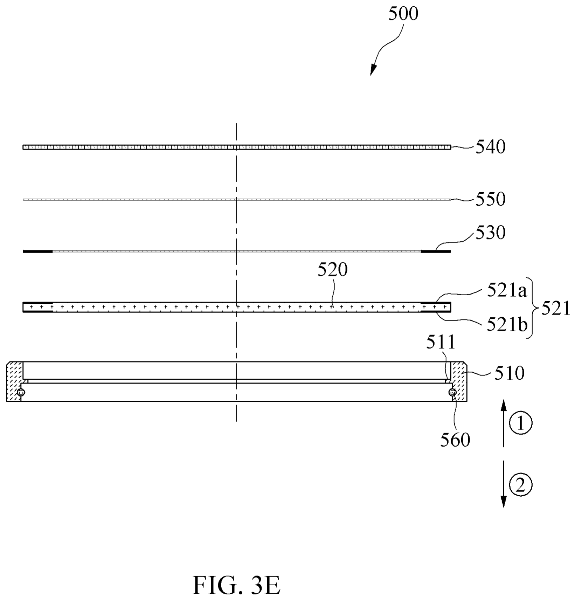

FIG. 3A is an assembled perspective view of a display assembly, according to an embodiment. FIG. 3B is an exploded perspective view of the display assembly, according to an embodiment. FIG. 3C is an exploded cross-sectional view of the display assembly, according to an embodiment. FIG. 3D is an enlarged view of a portion A of FIG. 3C. FIG. 3E is an exploded cross-sectional view of a cap assembly, according to an embodiment.

Referring to FIGS. 3A to 3E, in an embodiment, the display assembly 300 may include a display module 400 and a cap assembly 500.

In an embodiment, the display module 400 may provide visual information to a user. The display module 400 may include a module housing 410, the display panel 420, a main barrel 430, and/or the lens assembly 440.

In an embodiment, the module housing 410 may provide a space in which each component of the display module 400 is disposed. For example, the module housing 410 may provide a space in which the display panel 420, the main barrel 430, and/or the lens assembly 440 are disposed.

In an embodiment, the display panel 420 may generate light (e.g., visible light) at least in the first direction ①. The display panel 420 may be disposed in the module housing 410. For example, the display panel 420 may be fixedly connected to a portion of the module housing 410, which is in the second direction ②. Light generated from the display panel 420 may pass through the lens assembly 440 and be transmitted to the eyes of the user.

In an embodiment, the main barrel 430 may provide a space in which the lens assembly 440 is disposed. For example, the main barrel 430 may include a space on which the lens assembly 440 is seated. The main barrel 430 may be formed to surround an outer circumference of the lens assembly 440. The main barrel 430 may be disposed in the module housing 410. For example, the main barrel 430 may be fixedly connected to a portion of the module housing 410, which is in the first direction ①. Furthermore, this is an example, and the main barrel 430 and the module housing 410 may be substantially integrally formed.

In an embodiment, the lens assembly 440 may be positioned inside the main barrel 430. The lens assembly 440 may be positioned in the first direction ① with respect to the display panel 420. The lens assembly 440 may provide a path for light (e.g., visible light) to pass through. For example, the lens assembly 440 may be configured to provide a path for light generated from the display panel 420 to reach the eyes of the user. For example, the lens assembly 440 may be configured to enlarge and/or reduce the content displayed on the display panel 420 and transmit the content to the eyes of the user.

In an embodiment, the lens assembly 440 may include at least one main lens 441 and/or at least one polarizing film 442. For example, the main lens 441 may include at least one of a Fresnel lens, a pancake lens, a convex lens, or a multi-channel lens. However, the type of the main lens 441 is not limited thereto. For example, the main lens 441 may include a first main lens 441a, a second main lens 441b, a third main lens 441c, and a fourth main lens 441d. For example, the first main lens 441a, the second main lens 441b, the third main lens 441c, and the fourth main lens 441d may be sequentially disposed from the first direction ① toward the second direction ②. For example, among the plurality of main lenses 441, the first main lens 441a may be positioned at the outermost side in the first direction ①. For example, the polarizing film 442 may include a first polarizing film 442a and a second polarizing film 442b. For example, the first polarizing film 442a may be positioned on a surface of the first main lens 441a, which is in the first direction ①. For example, the first polarizing film 442a may be attached to the surface of the first main lens 441a, which is in the first direction ①, and be exposed to the outside of the display module 400. For example, the second polarizing film 442b may be positioned between the first main lens 441a and the second main lens 441b. However, this is an example, and the number, position, and/or shape of the main lenses 441 and/or polarizing films 442 are not limited thereto.

In an embodiment, among the plurality of main lenses 441, the first main lens 441a positioned at the outermost side in the first direction ① may be cut such that an outer region 443 is inclined. For example, the first main lens 441a may include a lens surface 4411 and a first inclined surface 4412. The lens surface 4411 may be a surface facing the first direction ①. The first inclined surface 4412 may be a surface formed to be inclined at the periphery of the lens surface 4411. For example, the first inclined surface 4412 may be formed to be inclined downward in a direction toward an outer side of the lens assembly 440. A second inclined surface 431 may be formed in an inner region of the main barrel 430 in contact with the first main lens 441a. The second inclined surface 431 may be formed to have an inclination direction that is opposite to that of the first inclined surface 4412. For example, the second inclined surface 431 may be formed to be inclined downward in a direction toward the center of the main barrel 430. The first inclined surface 4412 and the second inclined surface 431 may be positioned adjacent to each other, thereby forming a space in which an adhesive member 450 is applied therebetween.

In an embodiment, the first inclined surface 4412 may be inclined at an angle T of about 45 degrees or less with respect to the lens surface 4411. According to this structure, even when light generated from the display panel 420 is reflected on the first inclined surface 4412 when the light passes through the outer region 443 of the first main lens 441a, the light may be reflected in a direction toward the periphery of the lens assembly 440, not a direction toward the center of the lens assembly 440. Accordingly, the scattering phenomenon in which the light generated from the display panel 420 is reflected on the first inclined surface 4412 and is reflected in a direction toward the center of the lens assembly 440 may be prevented or reduced.

In an embodiment, the adhesive member 450 may be applied between the first inclined surface 4412 and the second inclined surface 431 to adhere the first main lens 441a and the main barrel 430 to each other. The adhesive member 450 may have a black color for light blocking. The black adhesive member 450 may block at least a portion of light leaking through the outer region 443 of the lens assembly 440. For example, at least a portion of light passing through the first inclined surface 4412 of the first main lens 441a may be blocked by the black adhesive member 450. Furthermore, when the adhesive member 450 does not have a black color, a surface treatment for light blocking may be applied to the first inclined surface 4412. For example, the surface treatment may include at least one of a laser treatment, blasting, roughening with a curve, or a printing treatment. However, this is an example, and the type of surface treatment is not limited thereto, and various surface treatments may be applied for light blocking.

In an embodiment, in the outer region 443 (e.g., at least a portion of the lens surface 4411 and/or at least a portion of the first inclined surface 4412) of the lens assembly 440, light generated from the display panel 420 may leak out of the display module 400 without passing through the first polarizing film 442a. For example, when the adhesive member 450 is not sufficiently applied to an area (e.g., the first inclined surface 4412) where the adhesive member 450 positioned in the outer region 443 of the lens assembly 440 is applied, light may leak through the outer region 443 of the lens assembly 440. For example, when manufacturing tolerance occurs in the first polarizing film 442a attached to the lens surface 4411 of the first main lens 441a or when an error in alignment occurs between the first polarizing film 442a and the first main lens 441a, light may leak through the outer region 443 of the lens assembly 440. However, this is an example, and light may leak through the outer region 443 of the lens assembly 440 for various reasons.

In an embodiment, the cap assembly 500 may be attachable to and detachable from a portion of the display module 400, which is the first direction ①. For example, the cap assembly 500 may be replaceable. For example, the user may couple the cap assembly 500 to the display module 400 or remove the cap assembly 500 from the display module 400 as needed.

In an embodiment, the cap assembly 500 may include a cap barrel 510, a cap lens 520, a light-blocking layer 530, an anti-scattering layer 540, an adhesive layer 550, and/or a sealing member 560.

In an embodiment, the cap barrel 510 may provide a space in which each component (e.g., the cap lens 520, the light-blocking layer 530, the anti-scattering layer 540, the adhesive layer 550, and/or the sealing member 560) of the cap assembly 500 is disposed. The cap barrel 510 may be attachable to and detachable from a portion of the display module 400, which is in the first direction ①. For example, the cap barrel 510 may be attachable to and detachable from a portion of the main barrel 430, which is in the first direction ①. For example, the cap barrel 510 may surround an end portion of the main barrel 430, which is in the first direction ①, from the outer side. For example, the inner diameter of the cap barrel 510 may be substantially the same as the outer diameter of the main barrel 430. For example, the end portion of the main barrel 430, which is in the first direction ①, may be inserted into the inside of the cap barrel 510. A stopper 511 may be formed on the inner side of the cap barrel 510 to adjust the depth at which the end portion of the main barrel 430, which is in the first direction ①, is inserted. The stopper 511 may protrude inward from the inner side surface of the cap barrel 510.

In an embodiment, the cap lens 520 may be provided in the cap barrel 510. For example, the cap lens 520 may be positioned in the first direction ① relative to the stopper 511 of the cap barrel 510. In a state in which the cap assembly 500 is coupled to the first direction ① of the display module 400, the cap lens 520 may be positioned in the first direction ① of the lens assembly 440 to supplement the enlargement and/or reduction function of the lens assembly 440. For example, the cap lens 520 may include a concave lens surface to increase the FoV of the lens assembly 440. For example, the cap lens 520 may include a convex lens surface to reduce the FoV of the lens assembly 440. The cap lens 520 may include a high-refractive material so as to have a high-refractive index while having a relatively thin thickness. For example, the cap lens 520 may have a refractive index of 1.6 or more. For example, the cap lens 520 may include plastic and/or glass materials. For example, the cap lens 520 may include a plastic material having a refractive index of 1.6 to 1.67. For example, the cap lens 520 may include a glass material having a refractive index of 1.8 to 2.0. However, this is an example, and the shape, refractive index, and/or material of the cap lens 520 are not limited thereto.

In an embodiment, a surface treatment for light blocking may be applied to an outer region 521 of the cap lens 520. For example, the surface treatment may include at least one of a laser treatment, a corrosion treatment, blasting, roughening with a curve, or a printing treatment. However, this is an example, and the type of surface treatment is not limited thereto, and various surface treatments may be applied for light blocking. For example, the outer region 521 may refer to a region having a predetermined width from the outermost side of the cap lens 520 toward the center. For example, the outer region 521 may be formed substantially in an annular shape. For example, the outer region 521 may include a first outer region 521a formed on a surface facing the first direction ① of the cap lens 520 and a second outer region 521b formed on a surface facing the second direction ② of the cap lens 520. When a wearable electronic device (e.g., the wearable electronic device 200 of FIG. 2B) is viewed from the first direction ①, at least a portion of the outer region 521 of the cap lens 520 to which the surface treatment is applied may overlap the outer region 443 of the lens assembly 440. For example, when the wearable electronic device (e.g., the wearable electronic device 200 of FIG. 2B) is viewed from the first direction ①, at least a portion of the outer region 521 of the cap lens 520 to which the surface treatment is applied may overlap an area between the outer circumference of the lens assembly 440 and the inner circumference of the main barrel 430.

In an embodiment, the light-blocking layer 530 may be positioned on one surface of the cap lens 520. For example, the light-blocking layer 530 may be laminated on one surface of the cap lens 520. For example, as shown in FIG. 3E, the light-blocking layer 530 may be positioned on the surface of the cap lens 520 facing the first direction ①. However, this is an example, and the light-blocking layer 530 may be positioned on the surface of the cap lens 520 facing the second direction ②. The light-blocking layer 530 may be formed substantially in an annular shape so as to have a cavity at the center. When the wearable electronic device (e.g., the wearable electronic device 200 of FIG. 2B) is viewed from the first direction ①, at least a portion of the light-blocking layer 530 may overlap the outer region 443 of the lens assembly 440. For example, when the wearable electronic device (e.g., the wearable electronic device 200 of FIG. 2B) is viewed from the first direction ①, at least a portion of the light-blocking layer 530 may overlap an area between the outer circumference of the lens assembly 440 and the inner circumference of the main barrel 430. For example, a surface treatment for light blocking may be applied to the light-blocking layer 530. For example, the surface treatment may include at least one of a laser treatment, a corrosion treatment, blasting, roughening with a curve, or a printing treatment. However, this is an example, and the type of surface treatment is not limited thereto, and various surface treatments may be applied for light blocking. For example, the light-blocking layer 530 may include a polarizing member positioned to have a polarizing direction that is different from that of the polarizing film 442 (e.g., the first polarizing film 442a positioned at the outermost side in the first direction ① among the polarizing films 442 of the lens assembly 440) of the lens assembly 440. For example, the light-blocking layer 530 may be positioned to have a polarizing direction that is substantially different from that of the first polarizing film 442a by 90. When the light-blocking layer 530 includes a polarizing member of the same material as the polarizing film 442 of the lens assembly 440, the light-blocking layer 530 may have the same texture, thereby reducing the sense of difference in design.

In an embodiment, at least a portion of light leaking through the outer region 443 of the lens assembly 440 may be blocked by the cap assembly 500 coupled to a portion of the display module 400, which is in the first direction ①. For example, at least a portion of light leaking through the outer region 443 of the lens assembly 440 may be blocked by the outer region 521 of the cap lens 520 and/or the light-blocking layer 530. Accordingly, in the display assembly 300 according to an embodiment, at least a portion of light leaking through the outer region 443 of the lens assembly 440 may be blocked using the cap assembly 500, thereby blocking or reducing the scattering phenomenon caused by the leaking light. Furthermore, in an embodiment, a surface treatment may be applied to the outer region 521 of the cap lens 520, and the separate light-blocking layer 530 may not be provided. In an embodiment, only the separate light-blocking layer 530 may be provided, and the surface treatment may not be applied to the outer region 521 of the cap lens 520. Herein, the expression "light is blocked" should not be understood to indicate that light is completely blocked but should also be understood to include a reduction in the amount of light.

In an embodiment, the anti-scattering layer 540 may be positioned in the first direction ① with respect to the cap lens 520. For example, the anti-scattering layer 540 may be positioned on a surface of the cap lens 520, which is in the first direction ①, and/or a surface of the light-blocking layer 530, which is in the first direction ①. The anti-scattering layer 540 may protect the cap lens 520 by preventing the surface of the cap lens 520, which is in the first direction ①, from being directly exposed to the outside of the cap assembly 500. The anti-scattering layer 540 may prevent or reduce fragments from scattering when the cap lens 520 and/or the lens assembly 440 is damaged. In an embodiment, when the outer region (e.g., the wearable electronic device 200) of the anti-scattering layer 540 is viewed from the first direction ①, a surface treatment for light blocking may be applied to an area overlapping the outer region 443 of the lens assembly 440. For example, the surface treatment may include at least one of a laser treatment, a corrosion treatment, blasting, roughening with a curve, or a printing treatment. However, this is an example, and the type of surface treatment is not limited thereto, and various surface treatments may be applied for light blocking.

In an embodiment, the adhesive layer 550 may adhere the anti-scattering layer 540 and the cap lens 520 to each other. For example, the adhesive layer 550 may adhere the anti-scattering layer 540 to the surface of the cap lens 520, which is in the first direction ①, and/or the surface of the light-blocking layer 530, which is in the first direction ①. For example, the adhesive layer 550 may include optically clear adhesive (OCA) and/or optically clear resin (OCR). The adhesive layer 550 may have a refractive index for tuning the refractive index of the cap lens 520. For example, the adhesive layer 550 may have a refractive index that is substantially the same as the refractive index of the cap lens 520. For example, the adhesive layer 550 may have a refractive index that is greater than or less than the refractive index of the cap lens 520 for finely tuning the refractive index of the cap lens 520. For example, the adhesive layer 550 may have a thickness gradient so as to have a refractive index. For example, the adhesive layer 550 may have a refractive index of 1 or less or a refractive index that is 1 or more lower than the refractive index of the cap lens 520 or the main lens 441, thereby preventing scattering into the lens.

In an embodiment, the sealing member 560 may be provided on the inner side of the cap barrel 510. For example, the sealing member 560 may be positioned in the second direction ② relative to the stopper 511. For example, the sealing member 560 may include an O-ring. The sealing member 560 may seal between the cap barrel 510 and the main barrel 430 in a state in which the cap barrel 510 and the main barrel 430 are coupled to each other. By means of the sealing member 560, the waterproofing and/or dustproofing of the lens assembly 440 may be possible in a state in which the cap assembly 500 is coupled to the display module 400.

In an embodiment, the cap assembly 500 may be coupled to a portion of the display module 400, which is in the first direction ①, and configured to block light leaking through the outer region 443 of the lens assembly 440. Through this, scattering of light generated from the display module 400 may be prevented and the visibility quality may be improved. The cap assembly 500 may be coupled to a portion of the display module 400, which is in the first direction ①, and configured to supplement the enlargement and/or reduction function of the lens assembly 440. For example, the user may select the desired cap assembly 500 according to a desired FoV to couple to the display module 400, thereby enlarging and/or reducing the FoV. The cap assembly 500 may be coupled to a portion of the display module 400, which is in the first direction ①, and configured to prevent a portion (e.g., the first polarizing film 442a) of the display module 400, which is in the first direction ①, from being exposed to the outside. Through this, it may be possible to prevent or reduce scratches in the lens assembly 440 or foreign materials from entering the lens assembly 440, and the quality maintenance period of the lens assembly 440 may be increased. In addition, the removal of foreign materials may become easier through the attachment and detachment of the cap assembly 500, and replacement may become easier in case of damage or contamination of the cap assembly 500. The cap assembly 500 may be coupled to a portion of the display module 400, which is in the first direction ①, configured to protect the lens assembly 440, and also configured to protect the naked eyes of the user when the lens assembly 440 is damaged. The cap assembly 500 may be coupled to a portion of the display module 400, which is in the first direction ①, and configured to improve the waterproof and/or dustproof function of the display assembly 300.

In an embodiment, the wearable electronic device 200 may include the housing 210 configured to be worn on the head of a user, the display module 400 provided in the housing 210 and including the main barrel 430, the display panel 420, and the lens assembly 440 positioned inside the main barrel 430 so as to be positioned in a first direction with respect to the display panel 420, and the cap assembly 500 configured to be attachable to and detachable from a portion of the display module 400, which is in the first direction, to block light leaking through the outer region 443 of the lens assembly 440. The cap assembly 500 may include the cap barrel 510 configured to be attachable to and detachable from the portion of the display module 400, which is in the first direction, and the cap lens 520 provided in the cap barrel 510.

In an embodiment, a surface treatment for light blocking may be applied to the outer region 521 of the cap lens 520.

In an embodiment, when the wearable electronic device 200 is viewed from the first direction, at least a portion of the outer region 521 of the cap lens 520 to which the surface treatment is applied may overlap the outer region 443 of the lens assembly 440.

In an embodiment, the cap lens 520 may have a refractive index of 1.6 or more.

In an embodiment, the cap assembly 500 may further include the light-blocking layer 530 positioned on one surface of the cap lens 520.

In an embodiment, when the wearable electronic device 200 is viewed from the first direction, at least a portion of the light-blocking layer 530 may overlap the outer region 443 of the lens assembly 440.

In an embodiment, a surface treatment for light blocking may be applied to the light-blocking layer 530.

In an embodiment, the lens assembly 440 may include at least one main lens 441 and the polarizing film 442. The light-blocking layer 530 may include a polarizing member positioned to have a polarizing direction that is different from that of the polarizing film 442.

In an embodiment, the cap assembly 500 may further include the anti-scattering layer 540 positioned in the first direction with respect to the cap lens 520.

In an embodiment, the cap assembly 500 may further include the adhesive layer 550 for adhering the anti-scattering layer 540 and the cap lens 520.

In an embodiment, the adhesive layer 550 may have a refractive index for tuning a refractive index of the cap lens 520.

In an embodiment, the cap assembly 500 may further include the sealing member 560 provided on the inner side of the cap barrel 510.

In an embodiment, the lens assembly 440 may include the plurality of main lenses 441. Among the plurality of main lenses 441, the first main lens 441a positioned at the outermost side in the first direction may include the lens surface 4411 facing the first direction and the first inclined surface 4412 formed to be inclined at the periphery of the lens surface 4411.

In an embodiment, the first inclined surface 4412 may be inclined at an angle of 45 degrees or less with respect to the lens surface 4411 such that light is not scattered inward from the outer region 443 of the first main lens 441a.

In an embodiment, an end portion of the main barrel 430, which is in the first direction, may be inserted into the inside of the cap barrel 510.

In an embodiment, the display assembly 300 applied to the wearable electronic device 200 may include the display module 400 including the main barrel 430, the display panel 420, and the lens assembly 440 positioned inside the main barrel 430 so as to be positioned in a first direction with respect to the display panel 420, and the cap assembly 500 configured to be attachable to and detachable from a portion of the display module 400, which is in the first direction, to block light leaking through the outer region 443 of the lens assembly 440. The cap assembly 500 may include the cap barrel 510 configured to be attachable to and detachable from the portion of the display module 400, which is in the first direction, and the cap lens 520 provided in the cap barrel 510.

In an embodiment, a surface treatment for light blocking may be applied to the outer region 521 of the cap lens 520. When the display assembly 300 is viewed from the first direction, at least a portion of the outer region 521 of the cap lens 520 to which the surface treatment is applied may overlap the outer region 443 of the lens assembly 440.

In an embodiment, the cap assembly 500 may further include the light-blocking layer 530 positioned on one surface of the cap lens 520. When the display assembly 300 is viewed from the first direction, at least a portion of the light-blocking layer 530 may overlap the outer region 443 of the lens assembly 440.

In an embodiment, the lens assembly 440 may include the plurality of main lenses 441. Among the plurality of main lenses 441, the first main lens 441a positioned at the outermost side in the first direction may include the lens surface 4411 facing the first direction and the first inclined surface 4412 formed to be inclined at the periphery of the lens surface 4411.

In an embodiment, the wearable electronic device 200 may include the housing 210 configured to be worn on the head of a user, the display module 400 provided in the housing 210 and including the main barrel 430, the display panel 420, and the lens assembly 440 positioned inside the main barrel 430 so as to be positioned in a first direction with respect to the display panel 420, and the cap assembly 500 configured to be attachable to and detachable from a portion of the display module 400, which is in the first direction, to block light leaking through the outer region 443 of the lens assembly 440. The cap assembly 500 may include the cap barrel 510 configured to be attachable to and detachable from the portion of the display module 400, which is in the first direction, the cap lens 520 provided in the cap barrel 510, and with a surface treatment for light blocking applied to the outer region 521, the light-blocking layer 530 positioned on one surface of the cap lens 520, and the anti-scattering layer 540 positioned in the first direction with respect to the cap lens 520. When the wearable electronic device 200 is viewed in the first direction, at least a portion of the outer region 521 of the cap lens 520 to which the surface treatment is applied and at least a portion of the light-blocking layer 530 may overlap the outer region 443 of the lens assembly 440.

## Claims

1. A wearable electronic device (200) comprising,
a housing (210) configured to be worn on a head of a user;
a display module (400) provided in the housing (210) and including a main barrel (430), a display panel (420), and a lens assembly (440) positioned inside the main barrel (430) in a first direction with respect to the display panel (420); and
a cap assembly (500) configured to be attachable to and detachable from a portion of the display module (400), which is in the first direction, to block light leaking through an outer region (443) of the lens assembly (440),
wherein the cap assembly (500) comprises,
a cap barrel (510) configured to be attachable to and detachable from the portion of the display module (400), which is in the first direction; and
a cap lens (520) provided in the cap barrel (510).

2. The wearable electronic device (200) of claim 1, wherein a surface treatment for light blocking is applied to an outer region (521) of the cap lens (520).

3. The wearable electronic device (200) of claim 1 or 2, wherein, when the wearable electronic device (200) is viewed from the first direction, at least a portion of the outer region (521) of the cap lens (520) to which the surface treatment is applied overlaps the outer region (443) of the lens assembly (440).

4. The wearable electronic device (200) of one of claims 1 to 3, wherein the cap lens (520) has a refractive index of 1.6 or more.

5. The wearable electronic device (200) of one of claims 1 to 4, wherein the cap assembly (500) further comprises a light-blocking layer (530) positioned on one surface of the cap lens (520).

6. The wearable electronic device (200) of one of claims 1 to 5, wherein, when the wearable electronic device (200) is viewed from the first direction, at least a portion of the light-blocking layer (530) overlaps the outer region (443) of the lens assembly (440).

7. The wearable electronic device (200) of one of claims 1 to 6, wherein a surface treatment for light blocking is applied to the light-blocking layer (530).

8. The wearable electronic device (200) of one of claims 1 to 7, wherein the lens assembly (440) includes at least one main lens (441) and a polarizing film (442), and
wherein the light-blocking layer (530) comprises a polarizing member positioned to have a polarizing direction different from that of the polarizing film (442).

9. The wearable electronic device (200) of one of claims 1 to 8, wherein the cap assembly (500) further comprises an anti-scattering layer (540) positioned in the first direction with respect to the cap lens (520).

10. The wearable electronic device (200) of one of claims 1 to 9, wherein the cap assembly (500) further comprises an adhesive layer (550) for adhering the anti-scattering layer (540) and the cap lens (520).

11. The wearable electronic device (200) of one of claims 1 to 10, wherein the adhesive layer (550) has a refractive index for tuning a refractive index of the cap lens (520).

12. The wearable electronic device (200) of one of claims 1 to 11, wherein the cap assembly (500) further comprises a sealing member (560) provided on an inner side of the cap barrel (510).

13. The wearable electronic device (200) of one of claims 1 to 12, wherein the lens assembly (440) includes a plurality of main lenses (441), and
wherein, among the plurality of main lenses (441), a first main lens (441a) positioned at an outermost side in the first direction includes a lens surface (4411) which faces the first direction, and a first inclined surface (4412) formed to be inclined at a periphery of the lens surface (4411).

14. The wearable electronic device (200) of one of claims 1 to 13, wherein the first inclined surface (4412) is inclined at an angle of 45 degrees or less with respect to the lens surface (4411) such that light is not scattered inward from an outer region (443) of the first main lens (441a).

15. The wearable electronic device (200) of one of claims 1 to 14, wherein an end portion of the main barrel (430), which is in the first direction, is inserted into an inside of the cap barrel (510).
